# EUROPEAN PATENT APPLICATION

(11) **EP 1 734 695 A1**
(43) Date of publication of application: **20.12.2006**
(21) Application number: 05012799.2
(22) Date of filing: 14.06.2005
(51) Int. Cl.: H04L 12/28

(54) **Back end device, front end device and a system**

(71) Applicant: SIEMENS AKTIENGESELLSCHAFT, 80333 München (DE)
(72) Inventor: Schaaf, Anton Hendrik, 2614 GP NL-Delft (NL); Van Overmeir, Peter, 81731 München (DE)

(57) **Abstract**

A back end device (13; 23) is adapted: a) to receive from a front end device (11) a request (REQ) for a storage, data retrieval or communication operation, the request (REQ) comprising an identifier identifying the front end device (11) or a service; b1) to select a communication means (RX, TX) to be used in communication to or from a network (10), responsive to the identifier, or b2) to select a mode in which a communication means (RX, TX) is operated; and c) to perform the storage, data retrieval, or communication operation using the communication means (RX, TX) selected.

A front end device (11) for producing a service is adapted to request from a back end device (13; 23) a storage, data retrieval or communication operation related to the service by sending a request (REQ) comprising an identifier identifying the front end device (11) or the service.

A system comprises
- a back end device (13; 23);
- at least one front end device (11); and
- at least one network (10).

## Description

### Field of the invention

The invention relates to back end devices, front end devices and systems comprising at least a back end device and at least one front end device.

### Background art

The still continuing development of electronics, especially in the field of consumer electronics, has led to a strongly increased availability of different kinds of electronic devices.

The duration of life cycles vary for different electronic devices. A mobile telephone is used more often only for six months, whereas an MP3 or CD player may be used for a considerably longer time, for example.

A first suspected reason for the observed differences in the duration of life cycles is that the technologies may still be in different development phases, and that some features offered by an electronic device become less useful or obsolete because of technological progress. A second suspected reason is that, especially on the consumer market, the customers tend to follow trends. For some products, their sex appeal and fashionable design seem to play a crucial role to ensure adequate sales.

A relatively new observation has been that many customers feel uncomfortable to replace an electronic device with a new one at relatively short intervals, e.g. every six months or every two-to-three years. The user discomfort may be increased also due to the fact that the features of electronic devices have been improving, causing cost pressure by increasing the price of the electronic device. The fast development has been observed to be particularly problematic for many customers regarding such electronic devices that need to perform a storage, data retrieval or communication operation.

### Summary of the invention

An objective of the invention is to alleviate problems related to different durations of life cycles of products that may need to perform a storage, data retrieval or communication operation. This objective can be met with a back end device as set out in claim 1, with a front end device as set out in claim 6, and with a system as set out in claim 8.

The dependent claims describe various advantageous embodiments of the invention.

### Advantages of the invention

If a back end device is adapted a) to receive from a front end device a request for a storage, data retrieval or communication operation, the request comprising an identifier identifying the front end device or a service, b1) to select a communication means to be used in communication to or from a network, responsive to the identifier, or b2) to select a mode in which a communication means is operated, and c) to perform the storage, data retrieval, or communication operation using the communication means selected, the storage, data retrieval or communication operation does not need to be performed in the front end device.

If the life cycle of the front end device is shorter than that of the back end device, the front end device may be made simpler since there is no need to fully implement the means for performing the storage, data retrieval, or communication operation.

If the life cycle of the front end device is longer than that of the back end device, the user may be able to use the familiar user interface of the front end device for a prolonged time, while still being able to benefit from the developments in storage, data retrieval, or communication operations provided by the back end together with the network.

If the back end device is d) further adapted to retrieve a user profile from the network, and e1) to use said user profile to select the communication means to be used in communication to or from the network, or e2) to use said user profile to select the mode in which the communication means is operated, the operation may be performed more in line with the user expectations and needs what comes to availability, speed and price considerations, for example.

The back end device may comprise a group of communication means. Instead of or in addition to this, the back end device may comprise a group of communication modes. Both solutions alone or in combination enable use of different communication channels and even that of different networks.

If a front end device adapted to produce a service is further adapted to request from a back end device a storage, data retrieval or communication operation related to the service by sending a request comprising an identifier identifying the front end device or the service, the front end device may be made simpler because it does not need to comprise means to perform such an operation. A further benefit may be that the development in back end devices and in the network regarding performing the operation may be utilized without the need to replace the front end device.

### List of Figures

In the following, the invention is described in more detail with reference to examples shown in attached drawings in Figures 1A to 3, of which:
Figure 1A illustrates a first system comprising a front end device, a back end device, and a network;
Figure 1B illustrates a second system comprising a front end device, a back end device, and a network;
Figure 2 is a first signaling diagram; and
Figure 3 is a second signaling diagram.

Same reference numerals refer to similar structural elements throughout the Figures.

### Detailed description

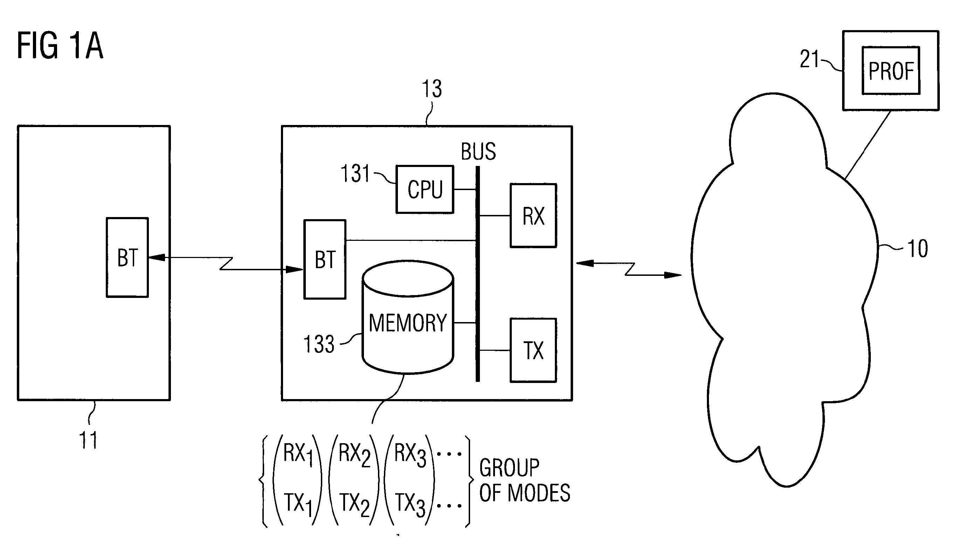

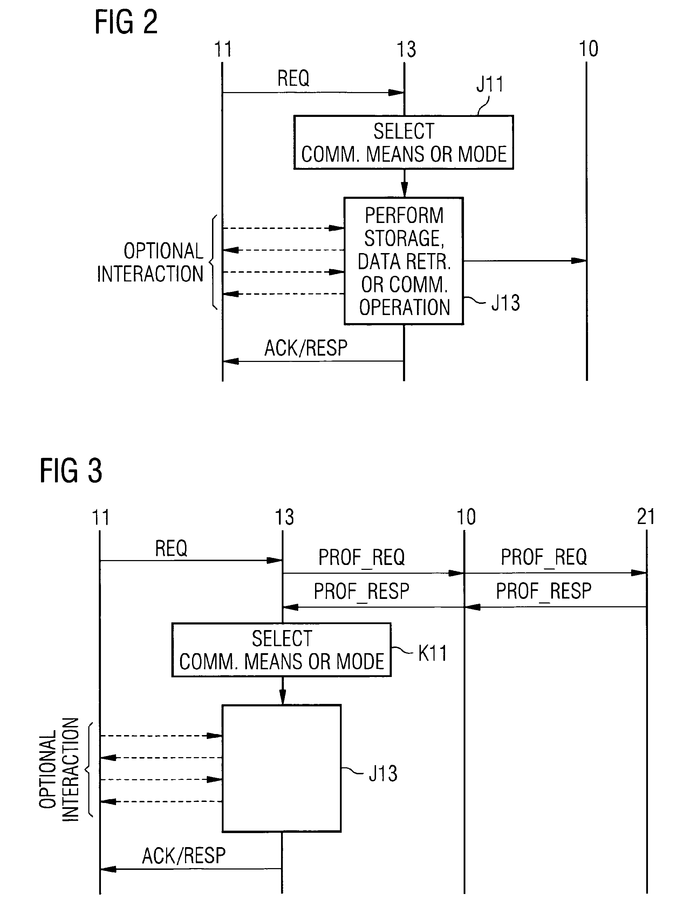

Figure 1A illustrates a first system comprising a front end device 11, a back end device 13, and a network 10. While describing the system of Figure 1A, its operation is explained with reference to Figure 2.

The front end device 11 is adapted to produce a service. The front end device 11 is furthermore adapted to request from a back end device 13 a storage, data retrieval or communication operation related to the service by sending a request REQ comprising an identifier identifying the front end device 11 or the service. The front end device 11 preferably comprises a wireless connection means BT adapted to connect to the back end device 13.

The back end device 13 preferably comprises a wireless connection means BT adapted to receive the request REQ from the front end device 11. The wireless connection means BT in the front end device 11 and in the back end device 13 may be any suitable means for wireless local connection, especially they may comprise Bluetooth, WLAN, or Infra-red communication means.

The communication means RX, TX may comprise transmitter or receiver, especially an optical or radio transmitter or receiver.

The back end device 13 comprises preferably a group of communication modes, in which RX₁, RX₂, ..., and TX₁, TX₂, ... define different software-implemented communication modes, the group preferably comprising at least one of the following: UMTS, GSM, WiMAX, WLAN, or IP communication modes. The communication modes may be stored in a memory 133 so that they can be defined by a processing unit 131 and executed by the communication means RX, TX. Sometimes, when the communication means RX, TX are radio communication means, this kind of set-up may be referred to as Software-Defined Radio.

The back end device 13 is adapted: a) to receive from a front end device 11 a request REQ for a storage, data retrieval or communication operation, the request REQ comprising an identifier identifying the front end device 11 or a service; b) to select (step J11) a mode in which a communication means RX, TX is operated; and c) to perform (step J13) the storage, data retrieval, or communication operation using the communication means RX, TX.

Figure 3 illustrates another aspect of the invention. The network 10 now further comprises a system 21 wherein a user profile PROF is stored. The back end device 13 is adapted to retrieve a user profile, preferably by transmitting a request PROF_REQ to the network 10. The network 10 preferably forwards the request PROF_REQ to the system 21 and receives the response PREF_RESP from the system, so that the network 10 may then forward the response PROF_RESP to the back end device 13.

In step K11, the back end device 13 may use said user profile PROF together with the identifier to select the mode in which the communication means RX, TX is operated.

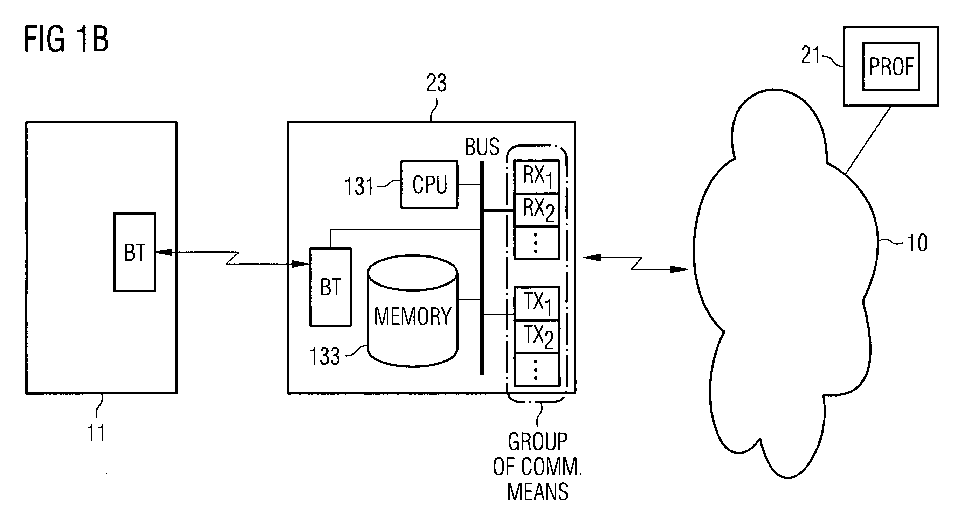

Figure 1B shows a back end device 23 that is an alternative embodiment for the back end device 13. The back end device 23 may nevertheless also comprise the group of modes for using communication means RX, TX.

The back end device 23 comprises a group of communication means RX, TX, in which RX₁, RX₂, ..., and TX₁, TX₂, ... define different physical communication means RX, TX, preferably comprising at least one of the following: UMTS, GSM, WiMAX, WLAN, or IP communication means.

In step J11, instead of or in addition to selecting the communication mode, the back end device 23 may be adapted, responsive to the identifier, to select which communication means RX, TX are to be used in communication to or from the network 10 or to use said user profile PROF to select.

In step K11, instead of or in addition to selecting the mode, the back end device 13 may use said user profile PROF together with the identifier to select which communication means RX, TX are to be used in communication to or from the network 10.

The front end device 11 may be any electronic device that is capable for providing a service. Preferably, the front end device 11 comprises a supplementary user interface for the back end device 11, 23. Non-limiting examples of services that the front end device 11 may provide are aural or visual representations of data, such as moving image, still image, or sound. Further examples comprise different kinds of interactive services preferably including multimedia content. Non-limiting examples of the front end device 11 include user interface blocks for mobile telephones, music players (in particular MP3 or CD players), video players (in particular DVD or MPEG players), and headsets.

The back end device 13, 23, may be a communication device, in particular a mobile communication device such as a mobile telephone. Mobile telephones include but are not limited to mobile telephones compatible with one more of the following standards: GSM, CDMA, UMTS, or W-CDMA. The different mobile telephones may be used in any suitable frequency band, and either in circuit-switched or packet-switched mode. For example, GPRS, packed-switched mode in GSM, can be used. The skilled person appreciates that the network 10 may be any suitable communication network.

Even though the invention was described by way of examples, the skilled person appreciates that the invention is not limited to any of the examples.

## Claims

1. A back end device (13; 23), **characterized in that**:
the back end device (13; 23) is adapted:
- a) to receive from a front end device (11) a request (REQ) for a storage, data retrieval or communication operation, the request (REQ) comprising an identifier identifying the front end device (11) or a service;
- b1) to select a communication means (RX, TX) to be used in communication to or from a network (10), responsive to the identifier, or b2) to select a mode in which a communication means (RX, TX) is operated; and
- c) to perform the storage, data retrieval, or communication operation using the communication means (RX, TX) selected.

2. A back end device (13; 23) according to claim 1, **wherein:** the back end device (13; 23) is further adapted: d) to retrieve a user profile (PROF_RESP) from the network (10), and e1) to use said user profile (PROF_RESP) to select the communication means (RX, TX) to be used in communication to or from the network (10) or e2) to use said user profile (PROF_RESP) to select the mode in which the communication means (RX, TX) is operated.

3. A back end device (13; 23) according to claim 1 or 2, **wherein:** the back end device (13) comprises a wireless connection means (BT) adapted to receive the request (REQ) from the front end device (11).

4. A back end device (23) according to claim 1, 2, or 3 **wherein:** the back end device (23) comprises a group of communication means (RX, TX), the group preferably comprising at least one of the following: UMTS, GSM, WiMAX, WLAN, or IP communication means.

5. A back end device (13) according to any one of the preceding claims, **wherein:** the back end device (13) comprises a group of communication modes, the group preferably comprising at least one of the following: UMTS, GSM, WiMAX, WLAN, or IP communication modes.

6. A front end device (11) adapted to produce a service, **characterized in that**: the front end device (11) is adapted to request from a back end device (13; 23) a storage, data retrieval or communication operation related to the service by sending a request (REQ) comprising an identifier identifying the front end device (11) or the service.

7. A front end device (11) according to claim 6, **wherein:** the front end device (11) comprises a wireless connection means (11) adapted to connect to the back end device (13; 23).

8. A system, **comprising:**
- a back end device (13; 23) according to any one of claims 1 to 5;
- at least one front end device (11) according to claim 6 or 7; and
- at least one network (10).

9. A system according to claim 8, **wherein:**
- the back end device (13; 23) is a back end device (13; 23) according to claim 2, or claim 2 and any one of claims 3, 4, 5, or claim 2 and any combination of claims 3, 4 or 5; and
- the at least one network (10) comprises at least one system (21) adapted: a) to store the user profile (PROF), b) to enable the back end device (13; 23) to access said user profile (PROF), and c) to enable the user of the back end device (13; 23) or the user of the front end device (11) to edit said user profile (PROF).
